# FASCICULE DE BREVET EUROPEEN

(11) **EP 2 380 656 B1**
(45) Date de publication et mention de la délivrance du brevet: **27.03.2013**
(21) Numéro de dépôt: 11161445.9
(22) Date de dépôt: 07.04.2011
(51) Int. Cl.: B01F 13/04, B01F 7/04, B01F 15/00, A01K 5/00

(54) **Godet pourvu d'un organe de mélange et/ou de distribution à double entraînement**
adekübel, der mit einem Mischorgan und/oder Verteilorgan mit doppeltem Antrieb ausgestattet ist
Bucket equipped with a dual-drive mixing and/or distributing system

(30) Priorité: 20.04.2010 FR 1053001
(43) Date de publication de la demande: 26.10.2011
(73) Titulaire: Etablissements Emily, 29800 Treflevenez (FR)
(72) Inventeur: Miossec, Arnaud, 29420, Mespaul (FR)
(74) Mandataire: Maillet, Alain

(56) Documents cités:
- EP-A2- 1 057 602
- FR-A1- 2 848 540
- FR-A1- 2 893 517

## Description

La présente invention se rapporte à un godet destiné à charger une matière, la mélanger, et le cas échéant, la distribuer.

Un tel godet peut être attelé à un engin porteur susceptible de le déplacer et de le faire fonctionner. Il se compose dans sa version de base d'une benne, d'un organe de mélange et/ou de distribution. La benne comprend en principe une paroi frontale, une paroi dorsale réunies, d'une part, par une paroi de fond et, d'autre part, par deux parois latérales. L'organe de mélange, de distribution se compose d'un arbre susceptible d'être entraîné à rotation dans la paroi de fond de la benne et qui porte à sa périphérie un filet hélicoïdal, des pales, pour mélanger la matière et/ou l'évacuer au travers d'une ouverture pratiquée dans l'une et/ou l'autre paroi latérale de la benne et qui peut être fermée ou dégagée par une trappe de déchargement.

De manière connue, il est possible d'entraîner à rotation cet arbre par l'intermédiaire d'un moteur, tel qu'un moteur hydraulique susceptible d'être alimenté par le circuit hydraulique de l'engin porteur. Le moteur entraîne, par l'intermédiaire d'un réducteur de vitesse, une extrémité dudit arbre. C'est le cas du godet de mélange et de distribution présente dans le brevet FR-A1-2 893 517, divulgant un godet selon le préambule de la revendication 1. Il incorpore une vis de distribution ainsi que des pales de mélange, qui sont portées par un même arbre tenu à une extrémité dans un palier solidaire d'une paroi latérale et entraîné de son autre extrémité par un moto-réducteur hydraulique logé dans un carter solidaire de la face interne de l'autre paroi latérale. Une autre solution intéressante consiste à placer le moteur et son réducteur à l'intérieur de l'arbre constitué en conséquence d'un tube creux lorsqu'il supporte un filet hélicoïdal ou pour le moins dans un manchon prolongeant cette extrémité de l'arbre lorsqu'il supporte des pales. Grâce à cette construction, l'opération de distribution de la matière au travers de l'ouverture de la paroi latérale n'est pas ou peu perturbée.

On connaît encore, à la lecture du brevet EP-A2-1 057 602, un malaxeur de grande capacité pour ciment qui comprend une cuve incorporant deux arbres pourvus de bras radiaux de malaxage. Pour abaisser son coût de fabrication, deux groupes motoréducteur, en remplacement d'un seul, sont fixés extérieurement contre les parois transversales de la cuve pour entrâiner à rotation les deux extrémités de chaque arbre.

Pour des largeurs de benne importantes, sachant que la puissance consommée est proportionnelle à cette largeur, il faut logiquement prévoir un dimensionnement en conséquence du moteur et de son réducteur de vitesse. Ce dimensionnement important pour les grandes largeurs impose un diamètre important de l'arbre creux ou du manchon dans lequel il est monté.

Le demandeur a cherché une solution pour diminuer le diamètre de cet arbre creux ou celui du manchon pour accroître l'efficacité de fonctionnement de l'organe de mélange, de distribution du godet et de manière générale pour en rationaliser sa construction.

A cet effet, est proposé un godet, selon la revendication 1, destiné à mélanger de la matière et/ou la distribuer, du type comprenant une benne délimitée par une paroi de fond, un organe de mélange et/ou de distribution monté à rotation autour d'un axe, le long de sa paroi de fond ; selon l'invention, le godet est pourvu d'un premier moteur et d'un second moteur d'entraînement à rotation dudit organe, les deux moteurs étant disposés de manière à pouvoir entraîner à rotation ledit organe, au niveau de ses deux extrémités.

En utilisant deux moteurs entraînant à ses deux extrémités l'organe plutôt qu'un seul, deux fois plus puissant, l'entraînant d'un seul côté, on réduit les contraintes mécaniques dans celui-ci, qui peut alors être dimensionné de manière plus réduite. Les deux moteurs sont également moins encombrants.

Selon l'invention, les deux moteurs sont disposés à l'intérieur de la benne.

L'encombrement extérieur du godet n'est pas augmenté.

Selon une caractéristique additionnelle de l'invention, l'organe comprend un arbre terminé à ses deux extrémités respectivement par deux manchons et les deux moteurs sont respectivement logés dans les deux manchons.

La construction plus compacte en diamètre de deux moteurs comparée à celle d'un moteur unique mais de puissance double, autorise un dimensionnement plus réduit en diamètre des manchons.

Selon une caractéristique additionnelle de l'invention, l'organe comprend un tube creux et les deux moteurs sont respectivement logés dans les extrémités du tube creux.

La construction plus compacte en diamètre de deux moteurs comparée à celle d'un moteur unique mais de puissance double, autorise un dimensionnement plus réduit en diamètre du tube creux.

Selon l'invention, la benne comporte des parois latérales et dont au moins une est traversée par une ouverture et une trappe de déchargement est montée de manière mobile contre cette paroi entre une position de fermeture de l'ouverture et une position de dégagement de ladite ouverture.

Dans sa version à double sortie, à gauche et à droite, le débit de distribution est identique des deux côtés du godet compte tenu de la structure symétrique de l'organe rotatif.

Selon une caractéristique additionnelle de l'invention, chaque moteur est du type hydraulique, accouplé à un réducteur de vitesse pour entraîner ledit organe.

Selon une caractéristique additionnelle de l'invention, chaque moteur et son réducteur sont logés et fixés à l'intérieur d'un pot solidaire d'une paroi latérale constitutive de la benne, depuis son côté intérieur.

Le moteur et son réducteur sont ainsi solidaires de la paroi latérale correspondante de la benne du godet.

Selon une caractéristique additionnelle de l'invention, chaque moteur est un moteur hydraulique de type lent, à fort couple.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective d'un godet mélangeur et distributeur selon l'invention,
la Fig. 2 représente une vue en coupe longitudinale d'un godet mélangeur et distributeur selon l'invention et,
la Fig.3 représente une vue en coupe longitudinale d'une variante de réalisation d'un godet de distribution selon l'invention.

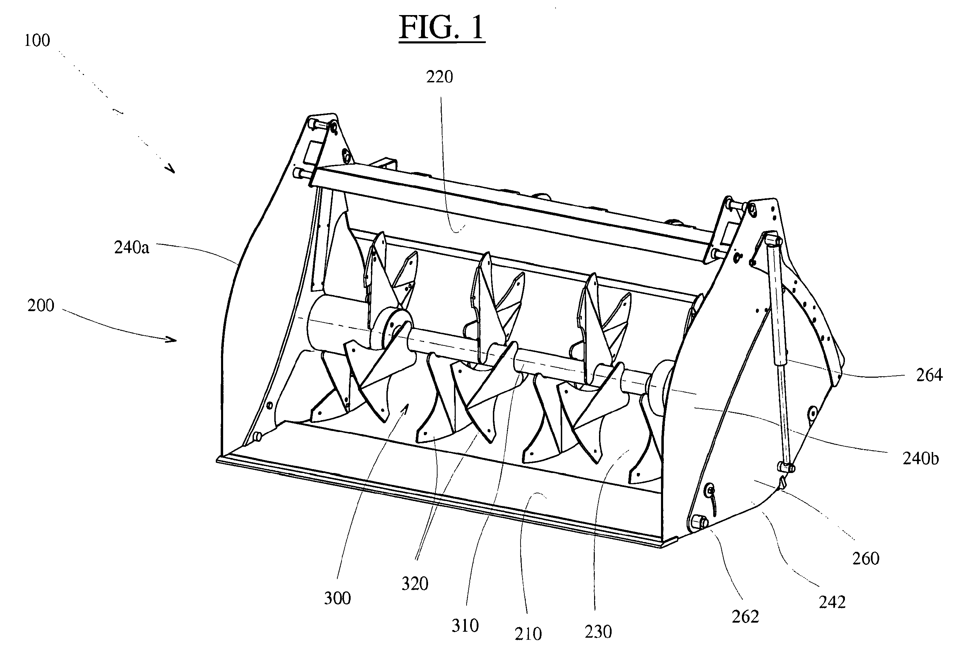

Le godet 100 présenté sur la Fig. 1 est destiné à être attelé à un engin pour charger, par exemple depuis un tas ou par l'intermédiaire d'une trémie, une matière pour la distribuer en un emplacement particulier. Il peut encore avantageusement être utilisé pour mélanger plusieurs matières. Une application intéressante pour ce godet consiste à incorporer par exemple une matière fibreuse telle que du foin avec un ensilage de maïs pour élaborer un aliment pour des animaux.

Le godet 100 se compose d'une benne 200, d'un organe rotatif 300 de mélange et de distribution de la matière qu'elle est susceptible de contenir.

La benne 200 est constituée d'une paroi frontale 210, d'une paroi dorsale 220, réunies, d'une part, par l'intermédiaire d'une paroi de fond 230 et, d'autre part, par l'intermédiaire de deux parois latérales 240. La paroi de fond 230 présente une portion d'arc de cercle qui se raccorde de part et d'autre avec la paroi frontale et la paroi dorsale. Les bords libres des deux parois latérales 240 présentent une géométrie convexe pour accroître la capacité de la benne.

Au moins l'une des parois latérales est pourvue d'une trappe de déchargement 260 mobile entre une position de fermeture d'une ouverture 242 réalisée dans ladite paroi et une position de dégagement de cette ouverture. Sur cette Fig. 1, la trappe 260 est tournée dans sa position de fermeture.

La trappe est montée à rotation contre la paroi latérale correspondante autour d'une articulation 262. Elle peut être déplacée entre ses deux positions extrêmes par l'intermédiaire d'un moyen de manoeuvre 264, constitué sur cette Fig. d'un vérin hydraulique susceptible d'être alimenté par le circuit hydraulique de l'engin.

Le godet de l'invention est pourvu d'un système capable, d'une part, de mélanger de manière efficace des matières contenues dans le godet et, d'autre part, de distribuer de manière régulière et rapide, le mélange obtenu, au travers d'une paroi latérale. Ces deux fonctions de mélange et de distribution peuvent être mises en oeuvre indépendamment. On peut ainsi mélanger des céréales et les vidanger par basculement du godet. On peut encore distribuer une seule matière au travers d'une ouverture latérale du godet.

Ce système comprend un organe rotatif de mélange et/ou de distribution, d'une conception particulière.

Sur la Fig. 1, l'organe 300 de mélange et de distribution se compose d'un arbre 310, autour duquel est montée une pluralité de pales 320. Cet arbre est monté à rotation entre les deux parois latérales 240a et 240b du godet, et de manière parallèle à sa paroi de fond 230.

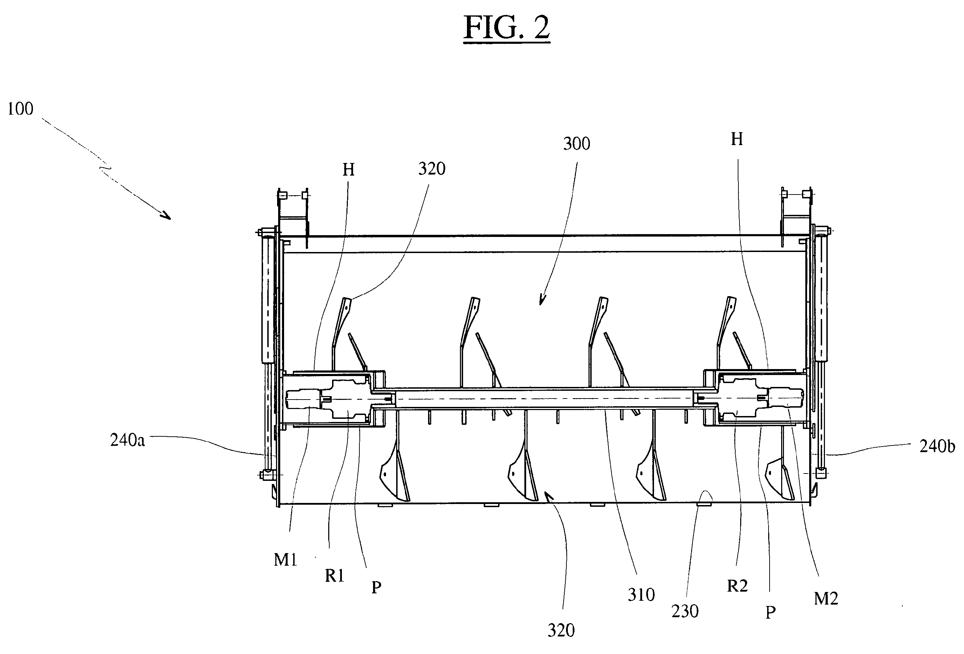

Sur la Fig. 2, l'arbre 310 est entraîné à rotation par l'intermédiaire d'un moyen d'entraînement comprenant deux moteurs M1 et M2 placés respectivement au niveau des deux extrémités de l'arbre. Ces moteurs sont avantageusement du type hydraulique, susceptibles d'être alimentés par un distributeur qu'il convient de raccorder avec le circuit hydraulique de l'engin. Ils sont alimentés en parallèle depuis ce distributeur. Ils peuvent encore être alimentés par l'intermédiaire d'un diviseur de débit.

Chaque moteur M est accouplé à un réducteur de vitesse R pour accroître le couple de travail de l'organe 300 et adapter la vitesse de rotation de l'arbre à celle des moteurs. Dans une variante de réalisation non représentée, le moteur et son réducteur associé sont remplacés par un moteur hydraulique de type lent à fort couple, c'est-à-dire dont la vitesse de rotation est en principe inférieure à 500 tours par minute et dont le couple est supérieur à 1000 Nm.

Chaque moteur est du type à sens de rotation réversible pour, d'une part, rendre le déversement possible de la matière d'un côté ou de l'autre du godet et pour accroître l'efficacité du brassage de la matière dans le godet, en inversant périodiquement leur sens de rotation.

Chaque moteur M et son réducteur R sont logés et fixés à l'intérieur d'un pot P solidaire d'une paroi latérale 240, depuis son côté intérieur, de sorte que l'arbre du réducteur puisse sortir au travers de la paroi de fond du pot pour entraîner une extrémité de l'arbre. L'arbre est de préférence creux pour alléger sa structure. Cette extrémité de l'arbre se prolonge en direction de la paroi latérale par un manchon H qui coiffe le pot, sans le toucher, pour recevoir au moins une pale pour que celles-ci puissent travailler sur toute la largeur interne de la benne. Les deux moteurs sont de la sorte disposés à l'intérieur de la benne 200 et n'entravent pas le fonctionnement de l'organe 300 de mélange et de distribution. La largeur du godet n'est pas augmentée et sa largeur utile demeure pratiquement celle de sa largeur hors tout, hormis la présence du ou des vérins 264.

L'utilisation de deux moteurs en remplacement d'un seul, de puissance double, autorise une conception plus compacte de l'organe 300, dans le sens où ces moteurs et surtout les réducteurs de vitesses sont moins encombrants. Le diamètre du pot de réception et celui du manchon sont réduits en conséquence. L'épaisseur de la paroi de l'arbre peut aussi être réduite puisqu'il ne transmet plus que la moitié du couple et est donc moins sollicité en torsion.

Par ailleurs, on obtient une construction symétrique du moyen d'entraînement si bien que les performances de distribution sont identiques quel que soit le côté de sortie. Le diamètre plus réduit de l'extrémité de l'organe 300 au niveau de l'emplacement de son moyen d'entraînement, favorise le brassage de la matière et sa distribution.

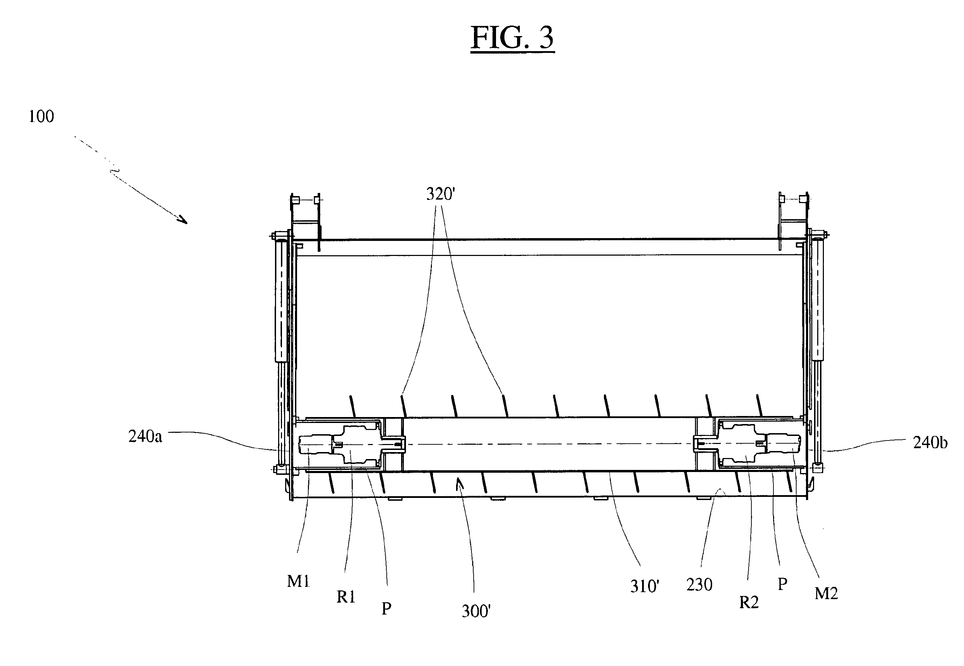

Dans un mode de réalisation, représenté sur la Fig. 3, l'organe 300' de distribution de la matière se présente sous la forme d'une vis sans fin comprenant un tube creux 310' ceinturé d'un filet hélicoïdal 320' apte à transférer la matière contenue dans le godet au travers de l'ouverture latérale qui est dégagée par la trappe de déchargement. Les deux moteurs M et leurs réducteurs respectifs R sont directement logés respectivement dans les extrémités du tube creux 310'.

Grâce au double entraînement de l'organe rotatif de mélange, de distribution, on obtient globalement une meilleure efficacité de fonctionnement du godet dans la mesure où le diamètre de noyau de cet organe est plus réduit que sur de tels organes de structures conventionnelles.

La distribution de la matière est obtenue avec les mêmes débits en sortie gauche ou en sortie droite du godet.

## Revendications

1. Godet (100) destiné à mélanger de la matière et/ou la distribuer, du type comprenant une benne (200) délimitée par une paroi de fond (230), un organe (300, 300') de mélange et/ou de distribution monté à rotation autour d'un axe (310, 310'), le long de sa paroi de fond, la benne (200) comportant des parois latérales (240) et dont au moins une est traversée par une ouverture (242), une trappe de déchargement (260) étant montée de manière mobile contre cette paroi entre une position de fermeture de l'ouverture (242) et une position de dégagement de ladite ouverture, **caractérisé en ce que** le godet est pourvu d'un premier moteur (M1) et d'un second moteur (M2) d'entraînement à rotation dudit organe, les deux moteurs (M) étant disposés à l'intérieur de la benne (200), de manière à pouvoir entraîner à rotation ledit organe, au niveau de ses deux extrémités, les deux moteurs (M) étant moins encombrants qu'un seul à puissance équivalente pour accroître l'efficacité de distribution au travers de ladite ouverture.

2. Godet (100) selon la revendication 1, **caractérisé en ce que** l'organe (300) comprend un arbre (310) terminé à ses deux extrémités respectivement par deux manchons (H) et **en ce que** les deux moteurs (M 1, M2) sont respectivement logés dans les deux manchons (H).

3. Godet (100) selon la revendication 1, **caractérisé en ce que** l'organe (300') comprend un tube creux (310') et **en ce que** les deux moteurs (M1, M2) sont respectivement logés dans les extrémités du tube creux.

4. Godet (100) selon l'une quelconque des revendications précédentes, **caractérisé en ce que** chaque moteur (M) est du type hydraulique, accouplé à un réducteur de vitesse (R) pour entraîner ledit organe (300, 300').

5. Godet (100) selon l'une quelconque des revendications 3 ou 4, **caractérisé en ce que** chaque moteur (M) et son réducteur (R) sont logés et fixés à l'intérieur d'un pot (P) solidaire d'une paroi latérale (240) constitutive de la benne (200), depuis son côté intérieur.

6. Godet (100) selon l'une quelconque des revendications 1 à 5, **caractérisé en ce que** chaque moteur est un moteur hydraulique de type lent, à fort couple, dont la vitesse de rotation est inférieure à 500 tours par minute et dont le couple est supérieur à 1000 Nm.

## Claims

1. Bucket (100) intended to mix material and/or distribute it, of the type including a bin (200) defined by a base wall (230), a mixing and/or distribution unit (300, 300') rotatably mounted about an axis (310, 310'), along its base wall, the bin (200) comprising side walls (240) at least one of which is pierced by an aperture (242), an unloading flap (260) being mounted so as to move against this wall between an aperture closed position (242) and a release position for said aperture, **characterised in that** the bucket is fitted with a first motor (M1) and a second motor (M2) to drive said unit in rotation, the two motors (M) being arranged inside the bin (200) so as to be able to drive said unit in rotation, at both of its ends, the two motors (M) being less bulky than a single one of equivalent power in order to increase the efficiency of distribution through said aperture.

2. Bucket (100) according to claim 1, **characterised in that** the unit (300) includes a shaft (310) terminated at both its ends respectively by two sleeves (H) and **in that** the two motors (M1, M2) are respectively housed in the two sleeves (H).

3. Bucket (100) according to claim 1, **characterised in that** the unit (300') includes a hollow tube (310') and **in that** the two motors (M1, M2) are respectively housed in the ends of the hollow tube.

4. Bucket (100) according to any one of the preceding claims, **characterised in that** each motor (M) is of the hydraulic type, coupled to a reduction gearbox (R) to drive said unit (300, 300').

5. Bucket (100) according to any one of claims 3 or 4, **characterised in that** each motor (M) and its reduction gearbox (R) are housed and fixed inside a pot (P) integrated with a constituent side wall (240) of the bin (200), from its interior side.

6. Bucket (100) according to any one of claims 1 to 5, **characterised in that** each motor is a hydraulic motor of the slow type, with high torque, the speed of rotation of which is less than 500 rotations per minute and the torque of which is over 1000 Nm.

## Patentansprüche

1. Zum Mischen und/oder Verteilen von Material bestimmte Schaufel (100) der Art, die einen von einer Rückwand (230) begrenzten Kübel (200) enthält, wobei ein Misch- und/oder Verteilorgan (300, 300') um eine Achse (310, 310') entlang ihrer Rückwand drehbar montiert ist, wobei der Kübel (200) Seitenwände (240) aufweist, von denen mindestens eine von einer Öffnung (242) durchquert wird, wobei eine Entladeklappe (260) zwischen einer Schließstellung der Öffnung (242) und einer Freigabestellung der Öffnung drehbar an dieser Wand montiert ist, **dadurch gekennzeichnet, dass** die Schaufel mit einem ersten Motor (M1) und mit einem zweiten Motor (M2) für den Drehantrieb des Organs versehen ist, wobei die zwei Motoren (M) im Inneren des Kübels (200) angeordnet sind, um das Organ im Bereich seiner zwei Enden in Drehung versetzen zu können, wobei die zwei Motoren (M) weniger platzraubend als ein einziger mit gleichwertiger Leistung sind, um den Wirkungsgrad der Verteilung durch die Öffnung zu erhöhen.

2. Schaufel (100) nach Anspruch 1, **dadurch gekennzeichnet, dass** das Organ (300) eine Welle (310) enthält, die an ihren zwei Enden in zwei Muffen (H) endet, und dass die zwei Motoren (M1, M2) in den zwei Muffen (H) untergebracht sind.

3. Schaufel (100) nach Anspruch 1, **dadurch gekennzeichnet, dass** das Organ (300') ein Hohlrohr (310') enthält und dass die zwei Motoren (M1, M2) in den Enden des Hohlrohrs untergebracht sind.

4. Schaufel (100) nach einem der vorhergehenden Ansprüche, **dadurch gekennzeichnet, dass** jeder Motor (M) vom Hydrauliktyp und an ein Untersetzungsgetriebe (R) gekoppelt ist, um das Organ (300, 300') anzutreiben.

5. Schaufel (100) nach einem der Ansprüche 3 oder 4, **dadurch gekennzeichnet, dass** jeder Motor (M) und sein Untersetzungsgetriebe (R) im Inneren eines Topfs (P) untergebracht und befestigt sind, der mit einer den Kübel (200) bildenden Seitenwand (240) von ihrer Innenseite aus fest verbunden ist.

6. Schaufel (100) nach einem der Ansprüche 1 bis 5, **dadurch gekennzeichnet, dass** jeder Motor ein Hydraulikmotor vom langsamlaufenden Typ mit starkem Drehmoment ist, dessen Drehgeschwindigkeit niedriger als 500 U/min und dessen Drehmoment höher als 1000 Nm ist.
